# EUROPÄISCHE PATENTSCHRIFT

(11) **EP 0 655 162 B1**
(45) Veröffentlichungstag und Bekanntmachung des Hinweises auf die Patenterteilung: **02.12.1998**
(21) Anmeldenummer: 94908177.2
(22) Anmeldetag: 12.08.1993
(51) Int. Cl.: G11B 7/24, C07K 14/195

(54) **ZUBEREITUNGEN VON BAKTERIORHODOPSIN-VARIANTEN MIT ERHÖHTER SPEICHERZEIT UND DEREN VERWENDUNG**
COMPOSITIONS OF BACTERIORHODOPSIN VARIANTS WITH INCREASED MEMORY TIME AND THEIR USE
COMPOSITIONS DE VARIANTES DE BACTERIORHODOPSINE A LONGEVITE D'ENREGISTREMENT ACCRUE ET LEUR UTILISATION

(30) Priorität: 13.08.1992 DE 4226868
(43) Veröffentlichungstag der Anmeldung: 31.05.1995
(73) Patentinhaber: MIB-Munich Innovative Biomaterials GmbH, 82266 Inning (DE)
(72) Erfinder: HAMPP, Norbert, D-80805 München (DE); POPP, Andreas, D-80798 München (DE); OESTERHELT, Dieter, D-80805 München (DE); BRÄUCHLE, Christoph, D-81739 München (DE)
(74) Vertreter: Huber, Bernhard, Dipl.-Chem.
(86) Internationale Anmeldenummer: EP9302154
(87) Internationale Veröffentlichungsnummer: WO9405008

(56) Entgegenhaltungen:
- EP-A- 0 487 099
- PATENT ABSTRACTS OF JAPAN vol. 15, no. 2514 (P-1220)26. Juni 1991 & JP,A,03 081 756 (FUJI PHOTO) 8. April 1991
- PATENT ABSTRACTS OF JAPAN vol. 14, no. 585 (P-1148)27. Dezember 1990 & JP,A,02 251 949 (FUJI PHOTO) 9. Oktober 1990
- Studies in Organic Chemistry 40- PHOTOCHRO H.Dürr Elsevier,Amsterdam NL,Chapter 29 Bacteriorhodopsin and its functioal varian N.Hamp, Seite 954-975
- Proceedings SPIE- International Society of Optical Engineering, vol. 1125, Thin Films Optics(1989),N.Hamp "Optical properties of polymeric films of Bacteriorhodopsin..." S

## Beschreibung

Die Erfindung betrifft Zubereitungen von Bakteriorhodopsin-Varianten mit erhöhter Speicherzeit und deren Verwendung für die reversible optische Informationsaufzeichnung.

Das Retinalprotein Bakteriorhodopsin ist ein biologisches Photochrom, das sich durch seine hohe thermische, chemische und photochemische Stabilität und seine hohe Lichtsensitivität auszeichnet 'P. Kouyama, K. Kinositu und A. Ikegami: Structure and Function of Bacteriorhodopsin, Adv. Biophys. 24 (1988), S. 123-175'. In Anwendungen wird dieses Retinalprotein bevorzugt in Form einer Purpurmembran eingesetzt. Purpurmembranen sind aus einer dichten, zwei-dimensionalen, meist kristallinen Anordnung des Bakteriorhodopsins aufgebaut, die in eine Lipiddoppelschicht eingelagert ist. Diese Form weist eine besonders hohe Stabilität auf; herausgelöstes Bakteriorhodopsin ist ungleich instabiler.

Wegen seiner photochromen Eigenschaft kann dieses Retinalprotein zur optischen Informationsaufzeichnung verwendet werden. Unter Lichteinwirkung wird eine Konfigurationsänderung des Retinalrests induziert. Diese Konfigurationsänderung ist sowohl thermisch wie auch photochemisch reversibel. Sie verläuft beim Wildtyp BR von all-trans im Ausgangszustand nach 13-cis im langlebigsten Intermediat. Damit einher geht eine reversible Änderung des Protonierungszustands der Schiffbasenbindung, mit der der Retinalrest an das Protein gekoppelt ist.

Bei der optischen Informationsaufzeichnung unterscheidet man generell zwischen der Kurzzeitspeicherung, die in der Datenverarbeitung benötigt wird, und der Langzeitspeicherung, wie sie für die Informationsspeicherung erforderlich ist.

Die Vorteile von Purpurmembranen für diese Anwendungen liegen in der hohen erzielbaren Auflösung, da die Strukturgröße der aktiven Elemente, d.h. der Bakteriorhodopsinmoleküle, in der Größenordnung von wenigen nm liegt, in der hohen Lichtechtheit des Materials und in der ausgezeichneten Lagerstabilität.

Eine Übersicht über mögliche technische Anwendungen von Purpurmembranen ist in 'D. Oesterhelt, C. Bräuchle, N. Hampp: Bakteriorhodopsin: A Biological Material for Information Processing. Quaterly Reviews of Biophysics, 24 (1991), S. 425-478' zu finden. In diesem Artikel sind auch Zubereitungen, insbesondere Filme für die Holographie, beschrieben, bei denen transiente Aufzeichnungen optisch eingeschriebener Information im Vordergrund steht.

Neben diesen zum Gebiet der Informationsverarbeitung zählenden Anwendungen als Kurzzeitspeicher besteht auch Interesse, optische Information über längere Zeit zu speichern. Insbesondere Medien, die mit Licht einer ersten Wellenlänge λ1 beschreibbar und mit Licht einer zweiten Wellenlänge λ2 löschbar sind, sind dabei von Interesse. Diese Reaktionen können formal durch ein Reaktionsschema E-(λ1)-P-(λ2)-E beschrieben werden, wobei E der Anfangs- bzw. Ausgangszustand (Edukt) des Materials ist und P ein langlebiges Photoprodukt von E, den sogenannten Speicherzustand, darstellt, der selbst ebenfalls photochemisch aktiv ist.

Als Speicherzeit sei die Zeitspanne definiert, innerhalb derer 36,8 % (1/e) des Photoproduktes ohne Lichteinwirkung, also z.B. thermisch, in einen anderen Zustand, z.B. den Ausgangszustand, relaxieren. Die Speicherzeit eines Mediums ist proportional der Lebensdauer des Zustandes, der zur Informationsspeicherung dient.

Die Speicherzeit kann bestimmt werden durch Messung der zeitabhängigen Absorptionsänderung im Maximum der Absorptionsbande des Ausgangszustandes oder des Speicherzustands.

Wird der Absorptionszustand eines Speichermediums zur Codierung von Information verwendet, so ist das erzielbare Kontrastverhältnis, welches wiederum wellenlängenabhängig ist, maßgeblich für das Signal/Rausch-Verhältnis. Als Kontrastverhältnis wird der Quotient der Absorption eines photochromen Materials vor und nach der Belichtung bezeichnet. Das maximale Kontrastverhältnis ist bei der Wellenlänge erreichbar, bei der das Differenzspektrum des unbelichteten und des belichteten Materials ein Maximum hat. Das Kontrastverhältnis wird dort nur durch die maximal erzielbare Umsetzung des Edukts in das Photoprodukt begrenzt.

Von großer Bedeutung für technische Anwendungen ist die Zahl der möglichen Schreib-/Löschzyklen, d.h. wie oft das Material mit Licht zwischen den Zuständen E und P hin- und hergeschalten werden kann. Diese Zahl sollte möglichst groß sein.

Ein generelles Problem bei der Verwendung photochromer Materialien zur reversiblen Informationsaufzeichnung ist, daß ein Auslesen bzw. Abtasten der gespeicherten Information mit Lichtwellenlängen im Bereich der Absorption des Ausgangs-bzw. Speicherzustands zu einer Veränderung der Information führt und damit zu einer Verminderung des Signal/Rausch-Verhältnisses. Bei digitaler Information (schwarz-weiß) kann dies durch ein Auffrischen der Information (= 'Refresh') nach dem Lesen kompensiert werden. Bei analoger Signalaufzeichnung ist dies praktisch nicht möglich. Aus diesem Grund finden photochrome Materialien für die reversible Aufzeichnung analoger Signale (Grauwertaufzeichnung) praktisch kaum Verwendung.

Der Photozyklus des Wildtyp Bakteriorhodopsin (BR_{WT}) ist bekannt. Das langlebigste Intermediat dieses Photozyklusses wird als M-Zustand bezeichnet. Vom Ausgangszustand von BR_{WT}, der als B-Zustand bezeichnet wird und der ein Absorptionsmaximum von ca. 570 nm hat, unterscheidet sich das Absorptionsmaximum des M-Zustands um 160 nm. Es liegt bei 410 nm. Bestrahlt man den B-Zustand mit Licht einer Wellenlänge im Bereich seiner Absorptionsbande, z.B. mit der Wellenlänge 570 nm ± 60 nm, so wird eine photochemische Reaktion hoher Quantenausbeute (durchschnittlich ≥ 64 %) gestartet, die innerhalb von 50 µs zur Population des M-Zustandes führt. In einer wässrigen Suspension von BR_{WT} Purpurmembran weist der M-Zustand eine Lebensdauer von ca. 10 ms auf. Der M-Zustand kann mit Licht einer Wellenlänge im Bereich seiner Absorptionsbande, z.B. der Wellenlänge 410 nm, in den Ausgangszustand zurückgeschaltet werden. In dieser Form ist die BR_{WT} Purpurmembran als Informationsspeicher ungeeignet. Um BR_{WT} als Informationsspeicher einsetzen zu können, muß der M-Zustand eine möglichst hohe Lebensdauer haben.

Es sind zwei Möglichkeiten bekannt, die Lebensdauer des M-Zustands zu erhöhen:
1. Tiefe Temperaturen: Bei Temperaturen < -50°C kann der M-Zustand "eingefroren" werden, d.h. seine thermische Relaxation wird unterbunden 'S.P. Balashov, F. Litvin, Photochemical Conversions of Bacteriorhodopsin, Biophys. J. 26 (1981), S. 566-581'. Die Möglichkeit, BR_{WT} bei diesen Temperaturen photochemisch mit blauem Licht, z.B. 410 nm, in den Grundzustand zurückzuschicken, bleibt erhalten.
2. Dehydratisierung: Durch Entzug von Wasser aus BR_{WT}-Zubereitungen kann die Lebensdauer des M-Zustandes bis ca. 150 sec. verlängert werden 'R. Korenstein, B. Hess, Hydration Effects of cis-trans Isomerization of Bacteriorhodopsin, FEBS Lett. 82 (1977), S. 7-11', 'Z. Chen, A. Lewis, H. Takei, I. Nebenzahl, Application of Bacteriorhodopsin Oriented in Polyvinyl Alcohol Films as an Erasable Optical Storage Medium, Appl. Opt. 30 (1991), S. 188-196', 'T.V. Dyukova, N.N. Vsevolodov, L.N. Chekulaeva, Change in the Photochemical Activity of Bacteriorhodopsin in Polymer Matrices on its Dehydration, Biophysics 30 (1985), 668-672'.

Die Verwendung von Purpurmembranen, enthaltend BR_{WT} bei tiefen Temperaturen, hat unter anderem folgende Nachteile:

Bei der Anwendung ist eine permanente Kühlung erforderlich. Es muß in speziellen Apparaturen gearbeitet werden, die die Kondensation von Luftfeuchtigkeit auf dem Speichermedium ausschließen. Es besteht die Möglichkeit eines Datenverlustes durch Ausfall der elektrischen Versorgung für die Kühlung oder durch andere technische Defekte. Diese Nachteile sind für eine technische Anwendung nicht akzeptabel und die Verwendung von BR_{WT} ist daher technisch bedeutungslos.

Das gleiche gilt für die Verlängerung der M-Lebensdauer durch Dehydratisierung. Sie hat unter anderem den Nachteil, daß die erzielbaren Speicherzeiten im Minutenbereich um Größenordnungen unterhalb den technisch notwendigen Speicherzeiten im Bereich von einem Tag bis zu 10 Jahren liegen.

Weiter ist bekannt, daß Purpurmembranen, die BR_{WT} enthalten, bei pH-Werten kleiner 3 in eine blaue Form umgewandelt werden. Diese werden als 'blue membrane' bezeichnet (K. Kimura, A. Ikegami, W. Stoeckenius, Salt and pH-dependent Changes of the Purple Membrane Absorption Spectrum, Photochem. Photobiol. 40 (1984), S. 461-464). Diese Form erhält man auch, wenn der Purpurmembran-Suspension Ionen, insbesondere zweiwertige Kationen (z.B. Ca²⁺, Mg²⁺) entzogen werden (C.-H. Chang, S.Y. Liu, R. Jonas, R. Godvinjee, The Pink Membrane: The Stable Photoproduct of Deionized Purple Membrane, Biophys. J. 52 (1987), S. 617-623). Diese Form ist photochemisch aktiv und in eine rosa Form, die sogenannte 'pink membrane', umwandelbar (S.Y. Liu, T.g. Ebrey, The Quantum Efficiency for the Interconversion of the Blue and Pink Forms of Purple Membrane, Photochem. Photobiol. 46 (1987), S. 263-267). Diese rosa Form ist ebenfalls photochemisch aktiv und kann mit Licht in die blaue Form zurückgeführt werden. Diese blauen Membranen sind technisch nicht verwertbar, da sie eine viel zu geringe photochemische Stabilität aufweisen und schon bei geringen Bestrahlungen irreversibel gebleicht werden (K. Tsuji, K. Rosenheck, The Low pH-species of Bacteriorhodopsin, FEBS Lett. 98 (1979), S. 368-372). Die Reversibilität dieser blauen Membranen ist erheblich kleiner als 500 Schreib-/Löschzyklen.

Bekannt ist weiter eine Bakteriorhodopsin-Variante, die ein Photoprodukt aufweist, welches bei Raumtemperatur stabiler ist, als das von BR_{WT}.

Bei dieser Bakteriorhodopsin-Variante ist die Aminosäure Asp an Position 96 gegen Asn ausgetauscht. Die Retinalkonfiguration von Ausgangszustand und langlebigstem Zwischenprodukt entspricht der jeweiligen Konfiguration des Wildtyps. Bei der Purpurmembran-Variante, enthaltend diese Bakteriorhodopsin-Variante, ist die Lebensdauer des langlebigsten Photoprodukts vom äußeren pH abhängig. Sie kann durch den äußeren pH eingestellt werden und verlängert sich bei alkalischen pH-Werten. Es wurden Lebenszeiten für das langlebigste Photoprodukt von bis zu 163 s bei einem pH-Wert von 9 erreicht (A. Miller, D. Oesterhelt, Biochim. Biophys. Acta 1020 (1990) 'S. 57-64; Kinetic optimization of bacteriorhodopsin by aspartic acid 96 as an internal proton donor). Eine Verwendung stärker alkalischer pH-Werte (13-14) ist nicht möglich, da dadurch die Stabilität des Proteins und damit die mögliche Einsatzdauer eines daraus hergestellten Aufzeichnungsmediums drastisch sinkt.

Durch Austausch des Retinalchromophors gewonnene Abarten der Wildtypform von Bakteriorhodopsin sind technisch nur von geringer Bedeutung, da sie nur durch Herstellung und Reinigung Chromophor-freier Purpurmembran ('Apomembran') und anschließender Zugabe des synthetischen Retinalanalogens hergestellt werden können. Diese Schritte sind kostenaufwendig. Außerdem werden im allgemeinen Purpurmembranen erhalten, bei denen nicht alle Bakterio-opsin-Moleküle mit Retinalanalogen besetzt sind.

EP-A-487099 offenbart die Herstellung der Bakteriorhodopsin-variante BR_{D85,96N} und den Einsatz dieser Bakteriorhodopsin-variante in optischen Systemen, die Anwendung in der Informationsaufzeichnung wird nicht angesprochen. Die in EP-A-487099 offenbarten Suspensionen sind zum Zwecke der Informationsaufzeichnung nicht geeignet.

JP-A-3081756 und JP-A-2251949 offenbaren den Zusatz von Guanidin und Arginin ähnlichen Verbindungen in Bakteriorhodopsin enthaltende, für optische Aufzeichnungen geeignete Zubereitungen; die Anwendung in der Informationsaufzeichnung wird nicht angesprochen. Die in JP-A-3081756 und JP-A-2251949 offenbarten Zusammensetzungen sind zum Zwecke der Informationsaufzeichung nicht geeignet, auch die Kombination der Materialien aus EP-A-487099 mit den in JP-A-3081756 und JP-A-2251949 offenbarten Zusätzen führt nicht zu Zusammensetzungen, die zum Zwecke der Informationsaufzeichnung geeignet sind.

Aus "Studies in Organic Chemistry 40 -PHOTOCHROMISM Molecules and Systems - Heinz Dürr und Henri Bouas-Laurent; Elsevier, Amsterdam, Niederlande; Chapter 29 'Bacteriorhodopsin and its Functional Variants: Potential Applications in Modern Optics' N. Hampp und C. Bräuchle, Seiten 954-975" (D4) und "Proceedings SPIE- International Society of Optical Engineering, Volume 1125, Thin films in Optics (1989), N. Hamp et al. 'Optical properties of polymeric films of Bacteriorhodopsin and its functional variants: new materials for optical information processing' Seiten 2-8" (D5) ist bekannt, daß sich bakteriorhodopsininhaltige Zubereitungen zum Speichern und zerstörungsfreien Auslesen von Informationen eignen müßten, eine konkrete Zusammensetzung, die den Anforderungen, die an eine solche Zubereitung zu stellen sind, genügt, ist allerdings nicht offenbart.

Aufgabe der Erfindung war es, Zubereitungen von Purpurmembran-Varianten mit vorteilhaften Eigenschaften, vor allem mit einer im Vergleich zu bekannten Purpurmembran-Varianten verlängerten Lebensdauer eines Photoproduktes bei Raumtemperatur, anzugeben.

Die Aufgabe wird gelöst durch Zubereitungen, enthaltend mindestens eine Purpurmembran-Variante, bei der bei Raumtemperatur eine Bakteriorhodopsin-Variante durch Bestrahlen mit Licht einer Wellenlänge im Bereich der Absorbtionsbande des Ausgangszustandes zu mehr als 50 % in ein Photoprodukt mit einem gegenüber dem Ausgangszustand um mindestens 10 nm spektral verschobenen Absorptionsmaximum übergeführt wird, wobei das Photoprodukt durch Bestrahlen mit Licht einer Wellenlänge im Bereich seiner Absorptionsbande in den Ausgangszustand zurückkonvertiert werden kann, dadurch gekennzeichnet, daß
die Konfiguration des Retinals des Photoproduktes gegenüber der Konfiguration des Retinals des Ausgangszustands verändert und nicht 13-cis ist
und/oder die Schiffbasenbindung des Retinals hydrolysiert ist,
und/oder das Photoprodukt eine Speicherzeit von mehr als einem Tag aufweist,
und/oder das Photoprodukt mindestens 10⁴ Schreib/Löschzyklen unter Erhalt von mindestens 50 % des ursprünglichen Kontrastverhältnisses erlaubt,
und der pH-Wert der Zubereitung zwischen 4 und 6 liegt,
und der Wassergehalt der Zubereitung zwischen 1 und 30 Gew. %, bezogen auf das Gesamtgewicht der Zubereitung, liegt,
und Hilfsstoffe zur Modulation der Protonenbeweglichkeit in einer Konzentration zwischen 1 und 80 Gew.-%, bezogen auf die Menge eingesetzter Purpurmembranzubereitung, sowie gegebenenfalls
Matrixmaterialien in einer Konzentration von bis zu 10 Gew.-%, bezogen auf das Gesamtgewicht der Zubereitung, vorhanden sind.

Purpurmembran-Varianten sind Purpurmembranen, die eine oder mehrere Bakteriorhodopsin-Varianten enthalten.

Als Bakteriorhodopsin-Varianten werden Bakteriorhodopsine bezeichnet, die sich vom Wildtyp-Bakteriorhodopsin unterscheiden durch den Austausch und/oder die Insertion und/oder Deletion einer oder mehrerer Aminosäuren und/oder den Ersatz des Retinalchromophors durch ein retinalanaloges Pigment.

Zur Herstellung der erfindungsgemäßen Zubereitungen sind Purpurmembran-Varianten geeignet, die bei Bestrahlung mit Licht ein Photoprodukt bilden, welches eine Retinalkonfiguration verschieden von 13-cis, bevorzugt 9-cis, besitzt. Weiter geeignet sind Purpurmembran-Varianten, die bei Bestrahlung mit Licht ein Photoprodukt bilden, welches ein freies Retinalmolekül in der Bindungsstelle des Proteins enthält.

Geeignete Purpurmembran-Varianten können beispielsweise hergestellt werden mit Verfahren, die von D. Oesterhelt, G. Krippahl, Ann. Microbiol. (Inst. Pasteur) 134B (1983), S. 137-150; Phototrophic Growth of Halobacteria and Its Use for Isolation of Photosynthetically-Deficient Mutants oder J. Soppa, D. Oesterhelt, J. Biol. Chem. 264 (1989), S. 13043-13048; Bacteriorhodopsin Mutants of Halobacterium spec. GRB. 1. The 5-Bromo-2'-Desoxyuridine-Selection as a Method to Isolate Point Mutants in Halobacteria. oder J. Soppa, D. Oesterhelt, Biol. Chem. Hoppe-seyler 368 (1987), S. 1116; Isolation and Characterization of Bacteriorhodopsin Mutants of Halobacterium GRB oder B.F.Ni, M. Chang, A. Duschl, J. Lanyi, R. Needleman; An Efficient System for the Synthesis of Bacteriorhodopsin in Halobacterium halobium, Gene 90 (1990), S. 169-172, angegeben wurden.

Diese Purpurmembran-Varianten können mit bekannten Verfahren isoliert und gereinigt werden. Solche sind beispielsweise bei S. Neuman, H. Leigeber, Verfahren zur Herstellung von Purpurmembran enthaltend Bakteriorhodopsin, DE 3922133, angemeldet am 5. Juli 1989, entspricht US 5079149, erteilt am 7. Januar 1992, beschrieben.

Geeignet zur Herstellung der erfindungsgemäßen Zubereitung sind beispielsweise Purpurmembran-Varianten, bei denen die Konfiguration des Retinalchromophors des Photoprodukts 7-cis, 11-cis oder 9-cis ist, wobei solche mit der Konfiguration 9-cis bevorzugt sind.

Besonders bevorzugt geeignet zur Herstellung der erfindungsgemäßen Zubereitung sind Purpurmembran-Varianten, die die Bakteriorhodopsin-variante BR_{D85,96N} enthalten.

Diese Purpurmembran-Variante ist beispielsweise nach den bereits genannten Verfahren aus dem Halobacterium-Stamm L33, welcher mit dem Vektor p319/D85,96N transformiert wurde, erhältlich. L33 (DSM 5735) wurde gemäß dem Budapester Vertrag bei der DSM Deutschen Sammlung für Mikroorganismen am 3. Januar 1990 hinterlegt. p319/D85,96N (DSM 6225) wurde gemäß dem Budapester Vertrag bei der DSM Deutschen Sammlung für Mikroorganismen am 31. Januar 1990 hinterlegt. Ein Verfahren zur Herstellung dieses und weiterer geeigneter Stämme wird in der Deutschen Patentanmeldung P 40 37 342.8, angemeldet am 23. November 1990, beschrieben.

Eine geeignete Purpurmembran-Variante wird mittels eines Puffers auf einen pH-Wert von 4 bis 6, eingestellt. Es werden 1 bis 80 Gew.-%, bevorzugt 5-20 Gew.-%, bezogen auf das Trockengewicht der Purpurmembran-Variante, Hilfsstoffe zur Modulation der Protonenbeweglichkeit zugesetzt. Hilfsstoffe zur Modulation der Protonenbeweglichkeit sind beispielsweise eine oder mehrere Substanzen, ausgewählt aus der Gruppe Glycerin, Guanidin, Arginin, Harnstoff, Diethylamin, Azide, Cyanate, Mono-, Di-, Polysaccharide, mono- oder polyfunktionelle Alkohole. Bevorzugt werden Glycerin, Arginin und/oder Diethylamin verwendet. Besonders bevorzugt geeignet ist Glycerin.

Wenn für die jeweilige Anwendung der Zubereitung erforderlich, können noch bis zu 10 Gew.-% Matrixmaterialien zugesetzt werden. Als Matrixmaterialien können Polyacrylamid, Gelatine, Agarose, Agar, Polyvinylpyrrolidon, Polyvinylalkohol, Polyvinylacetat, Pclyhydroxymethacrylat, Polyacrylat oder Mischungen aus diesen Substanzen eingesetzt werden. Der so erhaltenen Suspension wird das Wasser bis auf einen Restgehalt von 1 bis 30 %, bevorzugt bis auf einen Restgehalt von 5 bis 20 %, bezogen auf das Gesamtgewicht der Zubereitung, entzogen.

Der Wasserentzug aus den Purpurmembran-Suspensionen kann durch Sedimentation in Zentrifugen, Trocknen oder wiederholte Dialyse gegen das gewünschte Lösungsmittel erreicht werden. Gegebenenfalls können mehrere dieser Methoden kombiniert werden.

Diese Zubereitungen von Purpurmembranvarianten besitzen bei Raumtemperatur ein thermisch stabiles Photoprodukt, das eine Speicherzeit von mehr als einem Tag besitzt.

Die Zubereitungen ermöglichen zudem mindestens 10⁴ Schreib/Löschzyklen unter Erhalt von mindestens 50 % des ursprünglichen Kontrastverhältnisses.

Wird eine Purpurmembran-Variante, enthaltend die Bakteriorhodopsin Variante BR_{D85,96N}, eingesetzt, so besitzt die nach obigen Maßgaben erfindungsgemäß hergestellte Zubereitung eine Speicherzeit von mindestens einem Monat.

Bei der Verwendung der erfindungsgemäßen Zubereitung zur Informationsspeicherung sind die thermisch stabilen Zustände des erfindungsgemäßen Aufzeichnungsmaterials jeweils sowohl als Ausgangszustand als auch als Speicherzustand geeignet.

Im Sinne der Erfindung sind daher die Zuordnung von Ausgangs- und Speicherzustand zu den thermisch stabilen Zuständen des erfindungsgemäßen Aufzeichnungsmaterials austauschbar.

In bevorzugten Ausführungsformen liegen die Absorptionsmaxima des Ausgangszustandes und des Photoprodukts der Zubereitungen im Emissionsbereich von Festkörper bzw. Halbleiterlasern.

Die erfindungsgemäßen Zubereitungen werden bevorzugt in Form von Filmen mit einer optischen Dichte im Absorptionsmaximum von 0,1 bis 10, bevorzugt 1 bis 3, verwendet.

Soll eine erfindungsgemäße Zubereitung zur Herstellung von purpurmembranhaltigen Filmen verwendet werden, so wird sie unter Schwerkrafteinwirkung auf die Oberfläche eines Substrates kontrollierter optischer Güte aufgebracht und mit einem zweiten Substrat versiegelt. Für die Herstellung von Filmen, enthaltend immobilisierte Pupurmembran, ebenfalls geeignet ist die sogenannte "spin-coating"-Technik.

Die erfindungsgemäßen purpurmembranhaltigen Filme lassen sich beispielsweise in Systemen zur reversiblen Informationsaufzeichnung verwenden. Ein solches System zur reversiblen Informationsaufzeichnung mit BR-Filmen besteht aus einer erfindungsgemäßen Zubereitung als Aufzeichnungsmaterial, einer Schreiblichtquelle einer ersten Wellenlänge, einer zweiten Lichtquelle für das Auslesen der gespeicherten Information sowie gegebenenfalls einer Lichtquelle für das Löschen mit einer dritten Wellenlänge.

Die Information wird durch Bestrahlen der Zubereitung mit Licht einer Wellenlänge im Bereich des Absorptionsmaximums des Ausgangszustands eingeschrieben. Die Lichtquelle für das Auslesen der Information weist eine Wellenlänge auf, die innerhalb der Absorptionsbande des Anfangs- oder des Speicherzustandes liegt. Mit ihr wird der Absorptionszustand des erfindungsgemäßen Materials bestimmt. Mit diesem Verfahren kann gespeicherte Information nur absorptiv und nicht phasensensitiv ausgelesen werden. Das bedeutet, die gespeicherte Information wird beim Auslesen zerstört.

Für die Anwendung der erfindungsgemäßen Zubereitungen ist es wünschenswert, über ein Verfahren zu verfügen, welches das zerstörungsfreie Auslesen der gespeicherten Informationen erlaubt.

Bei einem solchen Verfahren verwendet man zur Aufzeichnung der Information auf den erfindungsgemäßen Zubereitungen und zum Auslesen der Information linear polarisiertes Licht jeweils unterschiedlicher Wellenlänge. Durch bestrahlen mit linear polarisiertem Licht einer Wellenlänge im Bereich des Absorptionsmaximums des Ausgangs zustandes wird in der Zubereitung eine photochemische Umwandlung induziert. Daraus resultiert eine anisotrope Absorptionsverteilung in der Zubereitung. Parallel dazu kommt es auch zu einer anisotropen Verteilung des Brechungsindex.

Das zerstörungsfreie Auslesen der so gespeicherten Information erfolgt derart, daß die Zubereitung mit einem photochemisch nicht aktiven linear polarisierten Detektionsstrahl, dessen Polarisationsrichtung weder parallel noch senkrecht zur Polarisationsrichtung des Anregungslichtes ist, durchstrahlt wird. Zum Auslesen ist bevorzugt Licht einer Wellenlänge im Bereich zwischen 360 nm und 3 µm, besonders bevorzugt im Bereich von 650 nm bis 850 nm, geeignet. Bevorzugt weist der photochemisch nicht aktive linear polarisierte Detektionsstrahl eine um 45° gegen die Polarisationsrichtung des Aufzeichnungslichtes gedrehte Polarisationsrichtung auf. Nach dem Durchtritt durch das Aufzeichnungsmaterial hat sich der Polarisationszustand des Detektionsstrahls geändert. Diese Änderung des Polarisationszustandes des Detektionsstrahls wird bestimmt. Dies kann beispielsweise durch die Messung seiner Intensität senkrecht zu seiner ursprünglichen Polarisationsrichtung erfolgen. Diese Messung kann beispielsweise mit einem Linear-Polarisationsfilter erfolgen.

Das Löschen der Information kann durch Bestrahlen mit polarisiertem oder mit unpolarisiertem Licht einer Wellenlänge im Bereich der Absoptionsbande des Speicherzustands erfolgen. Die Dauer der Bestrahlung hängt von den jeweiligen Betriebsparametern wie Wellenlänge und/oder Leistung des Bestrahlungslichtes bzw. von der Materialkonzentration und/oder der Schichtdicke in der Zubereitung ab.

Das beschriebene System/Verfahren kann zur Speicherung digitaler wie auch analoger Information eingesetzt werden. Die Information kann direkt oder holographisch in dem Material gespeichert werden.

Daneben lassen sich die erfindungsgemäßen Zubereitungen auch in allen bekannten Verfahren zur optischen Informationsspeicherung einsetzen wie sie aus dem Stand der Technik bekannt sind.

Mit den genannten Purpurmembranzubereitungen lassen sich reversible optische Datenträger mit paralleler Ein- und Ausgabe realisieren. Außerdem lassen sich räumliche Lichtmodulatoren für den IR-Bereich mit Polarisationscodierung realisieren. Rekonfigurierbare optische und/oder holographische Speicher für Anwendungen im Bereich der optischen neuronalen Netze, der assoziativen Speicher und der Mustererkennung sind weitere Anwendungsbeispiele. Eine Verwendung der erfindungsgemäßen Zubereitungen als rekonfigurierbare Absorber, optische Elemente oder rekonfigurierbare Phasenmodulatoren ist ebenfalls möglich (Technical Digest on Spatial Light Modulators and Applications, Optical Society of America, Washington 1990).

Die Zubereitungen lassen sich auch in Kombination mit einem transienten Speichermedium oder in Mischungen mit anderen Purpurmembran-Varianten einsetzen.

Durch schichtweise Anordnung von BR-Medien bekannter Art und den hier beschriebenen Langzeitspeichermedien ist es möglich, (a) durch Schreiben mit verschiedenen Wellenlängen, (b) durch Schreiben mit verschiedenen Intensitäten (bzw. Energien = Intensität x Zeit) Information selektiv (i) ausschließlich in den Kurzzeitspeicher, (ii) sowohl in den Kurzzeit- als auch Langzeitspeicher, (iii) ausschließlich in den Langzeitspeicher zu schreiben. Durch optischen Vergleich der im Kurzzeit- und Langzeitspeicher befindlichen Information können Informationsverarbeitungsverfahren bekannter Art auf einfache Weise realisiert werden.

Nachstehend wird die Erfindung anhand von Beispielen und Vergleichsbeispielen erläutert.

### Beispiel 1

1.0 ml einer Purpurmembransuspension des Typs BR_{D85,96N} mit einer optischen Dichte von 20 bei 600 nm wurde in eine Mikro-Dialysekammer gefüllt, die mit einer Dialysemembran von 2.4 nm (24 Å) Porengröße abgeschlossen ist. Die Purpurmembran-suspension wurde gegen eine Mischung aus 80 Gew.-% Glycerin und 20 Gew.-% eines 100 mM Citratpuffers pH 5.0, der 50 mM an NaCl enthält, dialysiert. Die Dialyse wurde 36 h durchgeführt, wobei das Puffer-Glycerin-Salz-Gemisch zweimal ausgewechselt wurde. Das erhaltene Material wurde zwischen zwei plangeschliffene Glasplatten gebracht, die durch einen Abstandhalter aus PVC mit einer Dicke von 100 µm getrennt sind.

Der so erhaltene Film von BR_{D85,96N} weist ein Absorptionsspektrum des Ausgangszustandes E auf, das sein Absorptionsmaximum bei 575 nm hat und eine Halbwertsbreite der Absorptionsbande von 150 nm besitzt.

Durch Bestrahlung mit Licht der Wellenlänge 676 nm bildet sich intensitätsabhängig ein Photoprodukt P mit einem Absorptionsmaximum von 490 nm und einer Halbwertsbreite der Absorptionsbande von 180 nm. Dieses Photoprodukt enthält 9-cis Retinal. Wurde die Bestrahlung in einer Intensität von 140 mW/cm² über einen Zeitraum von 10 min. durchgeführt, wurde diese Umsetzung zu mehr als 90 % erreicht. Die Speicherzeit dieser Purpurmembranzubereitung beträgt bei Raumtemperatur erheblich mehr als 30 Wochen. Nach 8 Monaten waren weniger als 20 % des Photoprodukts P zerfallen. Durch 10 minütiges Bestrahlen des Photoproduktes P mit Licht einer Wellenlänge von 532 nm mit einer Intensität von 140 mW/cm² wurde der Ausgangszustand wiederhergestellt.

Eine mit linear polarisiertem Licht einer Wellenlänge von 676 nm eingeschriebene Information, z.B. ein eingeschriebenes Punktmuster, konnte selektiv oder gesamt mittels linear polarisiertem Licht der Wellenlänge 799 nm ausgelesen werden, dessen Polarisation 45° gegenüber der bei der Aufzeichnung verwendeten Polarisationsrichtung gedreht war. Dazu wurde die Purpurmembranzubereitung mit dem Licht der Wellenlänge 799 nm durchstrahlt. Hinter der Purpurmembranzubereitung war ein Linearpolarisationsfilter angebracht, das so justiert war, daß an den Stellen, wo die Purpurmembran-Zubereitung nicht bestrahlt wurde, keine Transmission beobachtet wurde. An den Stellen, wo die Purpurmembran-Zubereitung das Photoprodukt bzw. den Speicherzustand enthält, wurde transmittierte Intensität beobachtet.

### Beispiel 2

0.5 ml einer Purpurmembransuspension des Typs BR_{D85,96N} mit einer optischen Dichte von 20 bei 600 nm wurde mit 9.5 ml Citratpuffer pH 5 (100 mMol/l), der 50 mMol/l Natriumchlorid und 6 % (Vol/Vol) Glycerin enthält, versetzt. Der pH wurde mittels einer Glaselektrode kontrolliert. Die erhaltene Suspension wurde in einen mit einer plangeschliffenen Glasplatte (Durchmesser 22.4 mm) abgeschlossenen Teflonzylinder (Innendurchmesser 16.2 mm) eingefüllt und in eine geeignete Zentrifugierhalterung eingepaßt. In einer Ultrazentrifuge wurde 45 Minuten bei 23000 UpM in einem Rotor des Typs TST 28.2 zentrifugiert. Der klare Überstand wurde anschließend verworfen. Der erhaltene Purpurmembranfilm hatte den Durchmesser der Zylinderbohrung und wurde 24h (Std.) bei 20°C und 30 % rel. Luftfeuchte getrocknet. Der Film wurde mit einer plangeschliffenen Glasplatte (Durchmesser 22.4 mm) verpreßt, wobei ein Edelstahlring mit 20 µm als Abstandshalter diente. Der so erhaltene Film hatte einen Wassergehalt von 5 Gew.-% (Gewichtsverlust beim Trocknen 24 h, bei 20°C über CaCl₂). Das durch 14 minütiges Bestrahlen mit Licht einer Wellenlänge von 676 nm bei einer Intensität von 100 mW/cm² erhaltene Photoprodukt hatte eine Speicherzeit von ca. einer Woche.

Das zerstörungsfreie Auslesen der Information war, wie in Beispiel 1 beschrieben, möglich.

### Vergleichsbeispiel 1

Es wurde wie in Beispiel 1 verfahren, statt Glycerin wurde Wasser mit dem genannten Puffer und NaCl (100 mM Citratpuffer pH 5.0, der 50 mM NaCl enthält) versetzt und die BR_{D85,96N}-Suspension gegen die Mischung dialysiert. Der so erhaltene Film wurde wie in Beispiel 1 mit linear polarisiertem Licht der Wellenlänge 676 nm (140 mW/10 min) bestrahlt. Die so eingeschriebene Information kann nach Abschalten des informationstragenden Lichts nicht mehr ausgelesen werden, da der Speicherzustand zu kurzlebig ist.

### Vergleichsbeispiel 2

Es wurde wie in Beispiel 2 verfahren. Statt einer Purpurmembran, die die Bakteriorhodopsin-Variante BR_{D85,96N} enthält, wurde eine verwendet, die die Bakteriorhodopsin-Variante BR_{D96N} beinhaltet. Das wie in Beispiel 1 beschriebene populierte Photointermediat hat eine Speicherzeit von weniger als 10 Minuten.

### Vergleichsbeispiel 3

Es wurde wie in Vergleichsbeispiel 2 verfahren. Statt einer Purpurmembran, die die Bakteriorhodopsin-Variante BR_{D96N} enthält, wurde eine verwendet, die die Bakteriorhodopsin-Variante BR_{D85E} (H.J. Butt et al., Aspartic acids 96 and 85 play a central role in the function of bacteriorhodopsin as a proton pump, the EMBO Journal vol. 8, no. 6 (1989), pp. 1657-1663) beinhaltet. Das populierte Photointermediat hat eine Lebenszeit von etwa 4,5 Stunden.

## Patentansprüche

1. Zubereitung enthaltend mindestens eine Purpurmembran-Variante, bei der bei Raumtemperatur eine Bakteriorhodopsin-Variante durch Bestrahlen mit Licht einer Wellenlänge im Bereich der Absorptionsbande des Ausgangszustandes zu mehr als 50 % in ein Photoprodukt mit einem gegenüber dem Ausgangszustand um mindestens 10 nm spektral verschobenen Absorptionsmaximum übergeführt wird, wobei die Konfiguration des Retinals des Photoproduktes gegenüber der Konfiguration des Retinals des Ausgangszustands verändert und verschieden von 13-cis ist, oder die Schiffbasenbindung des Retinals hydrolysiert ist und das Photoprodukt durch Bestrahlen mit Licht einer Wellenlänge im Bereich seiner Absorptionsbande in den Ausgangszustand zurückkonvertiert werden kann, dadurch gekennzeichnet, daß
der pH-Wert der Zubereitung zwischen 4 und 6 liegt, und der Wassergehalt der Zubereitung zwischen 1 und 30 Gew.-%, bezogen auf das Gesamtgewicht der Zubereitung, liegt,
und Hilfsstoffe zur Modulation der Protonenbeweglichkeit in einer Konzentration zwischen 1 und 80 Gew.-%, bezogen auf die Menge eingesetzter Purpurmembranzubereitung, sowie gegebenenfalls
Matrixmaterialien in einer Konzentration von bis zu 10 Gew.-%, bezogen auf das Gesamtgewicht der Zubereitung, vorhanden sind.

2. Zubereitung nach Anspruch 1, dadurch gekennzeichnet, daß die Konfiguration des Retinalchromophors des Photoprodukts 9-cis ist.

3. Zubereitung nach einem oder beiden der Ansprüche 1 oder 2, dadurch gekennzeichnet, daß sie als Bakteriorhodopsin Variante BR_{D85,96N} enthalten.

4. Zubereitung nach einem oder mehreren der Ansprüche 1 bis 3, dadurch gekennzeichnet, daß als Hilfsstoffe zur Modulation der Protonenbeweglichkeit eine oder mehrere Substanzen aus der Gruppe Glyzerin, Guanidin, Arginin, Harnstoff, Diethylamin, der Azide, Cyanate, Glycole, Mono-, Di- und Polysaccharide, mono- oder polyfunktionellen Alkohole eingesetzt werden.

5. Zubereitung nach einem oder mehreren der Ansprüche 1 bis 4, dadurch gekennzeichnet, daß als Matrixmaterialien Polyacralamid, Gelatine, Agarose, Agar, Polyvinylpyrrolidon, Polyvinylalkohol, Polyvinylacetat, Polyhydroxymethylacrylat und Mischungen daraus eingesetzt werden.

6. Zubereitung nach einem oder mehreren der Ansprüche 1 bis 5, dadurch gekennzeichnet, daß die Absorptionsmaxima des Ausgangszustandes und des Photoprodukts im Emissionsbereich von Festkörper- bzw. Halbleiterlasern liegen.

7. Verwendung einer Zubereitung nach einem oder mehreren der Ansprüche 1 bis 6 zur reversiblen optischen Informationsaufzeichnung.

8. Verwendung einer Zubereitung nach einem oder mehreren der Ansprüche 1 bis 6 in einem Verfahren, welches ein zerstörungsfreies Auslesen von Information ermöglicht.

9. Verwendung einer Zubereitung nach einem oder mehreren der Ansprüche 1 bis 6 in der Holographie oder in der Mustererkennung oder in optischen neuronalen Netzen und/oder assoziativen Speichern.

10. Verwendung einer Zubereitung nach einem oder mehreren der Ansprüche 1 bis 6 als rekonfigurierbare Absorber, optische Elemente oder rekonfigurierbare Phasenmodulatoren.

11. Verwendung einer Zubereitung nach einem oder mehreren der Ansprüche 1 bis 6 in Kombination mit einem transienten Speichermedium.

12. Verwendung einer Zubereitung nach einem oder mehreren der Ansprüche 1 bis 6 in Mischungen mit anderen Purpurmembran-Varianten.

13. Mittel zur Speicherung von Information enthaltend eine Zubereitung nach einem oder mehreren der Ansprüche 1 bis 6.

14. Verfahren zum Speichern und zerstörungsfreien Auslesen von Information in einer Zubereitung gemäß einem oder mehreren der Ansprüche 1 bis 6, dadurch gekennzeichnet, daß durch Bestrahlen der Zubereitung mit linear polarisiertem Licht einer Wellenlänge im Bereich des Absorbtionsmaximums des Ausgangs zustands der in der Zubereitung enthaltenen Bakteriorhodopsin-Variante die Information gespeichert wird und die so gespeicherte Information detektiert wird, indem die Änderung des Polarisationszustands eines linear polarisierten photochemisch nicht aktiven Detektionsstrahls nach Durchtritt durch die Zubereitung bestimmt wird, wobei der Detektionsstrahl weder senkrecht noch parallel zur Polarisationsrichtung des Aufzeichnungslichtes polarisiert ist.

## Claims

1. A preparation containing at least one purple membrane variant in which more than 50 % of a bacteriorhodopsin variant is converted at room temperature into a photoproduct having an absorption maximum which is shifted spectrally by at least 10 nm compared with the initial state by irradiation with light having a wavelength in the region of the absorption band of the initial state where the configuration of the retinal of the photoproduct is changed compared with the configuration of the retinal of the initial state and is different from 13-cis, or the Schiff base bond of the retinal is hydrolyzed and the photoproduct can be converted back into the initial state by irradiation with light having a wavelength in the region of its absorption band,
wherein the pH of the preparation is between 4 and 6 and the water content of the preparation is between 1 and 30 % by weight relative to the total weight of the preparation,
and auxiliary substances for modulation of the proton mobility are present at a concentration of between 1 and 80 % by weight relative to the amount of purple membrane preparation used and optionally matrix materials are present at a concentration of up to 10 % by weight relative to the total weight of the preparation.

2. Preparation as claimed in claim 1, wherein the configuration of the retinal chromophore of the photoproduct is 9-cis.

3. Preparation as claimed in one of the claims 1 and 2, wherein it contains BR_{D85,96N} as the bacteriorhodopsin variant.

4. Preparation as claimed in one or several of the claims 1 to 3, wherein one or several substances from the group comprising glycerol, guanidine, arginine, urea, diethylamine, azides, cyanates, glycols, mono-, di- and polysaccharides and mono- or polyfunctional alcohols are used as auxiliary substances to modulate proton mobility.

5. Preparation as claimed in one or several of the claims 1 to 4, wherein polyacrylamide, gelatin, agarose, agar, polyvinylpyrrolidone, polyvinyl alcohol, polyvinyl acetate, polyhydroxymethyl acrylate and mixtures thereof are used as matrix materials.

6. Preparation as claimed in one or several of the claims 1 to 5, wherein the absorption maxima of the initial state and of the photoproduct are in the emission range of solid or semiconductor lasers.

7. Use of a preparation as claimed in one or several of the claims 1 to 6 for reversible optical information recording.

8. Use of a preparation as claimed in one or several of the claims 1 to 6 in a process which enables non-destructive reading of information.

9. Use of a preparation as claimed in one or several of the claims 1 to 6 in holography or in pattern recognition or in optical neural networks and/or associative memories.

10. Use of a preparation as claimed in one or several of the claims 1 to 6 as reconfigurable absorbers, optical elements or reconfigurable phase modulators.

11. Use of a preparation as claimed in one or several of the claims 1 to 6 in combination with a transient storage medium.

12. Use of a preparation as claimed in one or several of the claims 1 to 6 in mixtures with other purple membrane variants.

13. Means for storing information containing a preparation as claimed in one or several of the claims 1 to 6.

14. A process for the storage and non-destructive reading of information in a preparation as claimed in one or several of the claims 1 to 6, wherein information is stored by irradiating the preparation with linearly-polarized light having a wavelength in the region of the absorption maximum of the initial state of the bacteriorhodopsin variant present in the preparation, and detecting the information stored in this way by determining the change in the polarization state of a linearly-polarized photochemically inactive detection beam after it has passed through the preparation, where the detection beam is polarized neither perpendicular nor parallel to the polarization direction of the recording light.

## Revendications

1. Préparation contenant au moins une variante de membrane pourpre, dans laquelle, à la température ambiante, par exposition à une lumière d'une longueur d'onde située dans le domaine de la bande d'absorption de l'état initial, une variante de bactériorhodopsine est transformée à plus de 50 % en un photoproduit dont le maximum d'absorption présente un décalage spectral d'au moins 10 nm par rapport à l'état initial, la configuration du rétinal du photoproduit étant modifiée par rapport à la configuration du rétinal de l'état initial et différente de 13-cis, ou la liaison de la base de Schiff du rétinal est hydrolysée, et le photoproduit peut revenir à l'état initial par exposition à de la lumière d'une longueur d'onde située dans le domaine de sa bande d'absorption,
caractérisée en ce que le pH de la préparation est compris entre 4 et 6, et la teneur en eau de la préparation est comprise entre 1 et 30 % en masse par rapport à la masse totale de la préparation,
et en ce qu'elle contient des agents auxiliaires pour la modulation de la mobilité des protons, à une concentration comprise entre 1 et 80 % en masse par rapport à la quantité de préparation de membrane pourpre utilisée, et éventuellement des matériaux de matrice en une concentration allant jusqu'à 10 % en masse par rapport à la masse totale de la préparation.

2. Préparation selon la revendication 1, caractérisée en ce que le chromophore du rétinal du photoproduit a la configuration 9-cis.

3. Préparation selon l'une des revendications 1 ou 2 ou les deux, caractérisée en ce qu'elle contient comme variante de bactériorhodopsine la BR_{D85,96N}.

4. Préparation selon l'une ou plusieurs des revendications 1 à 3, caractérisée en ce que l'on utilise comme agents auxiliaires pour la modulation de la mobilité des photons une ou plusieurs substances du groupe constitué par le glycérol, la guanidine, l'arginine, l'urée, la diéthylamine, des azotures, des cyanates, des glycols, des mono-, di- et polysaccharides, des monoalcools ou des polyalcools.

5. Préparation selon l'une ou plusieurs des revendications 1 à 4, caractérisée en ce que l'on utilise comme matériaux de matrice un polyacrylamide, une gélatine, de l'agarose, de la gélose, de la polyvinylpyrrolidone, du poly(alcool vinylique), du poly(acétate de vinyle), du poly(acrylate d'hydroxyméthyle) et leurs mélanges.

6. Préparation selon l'une ou plusieurs des revendications 1 à 5, caractérisée en ce que les maximums d'absorption de l'état initial et du photoproduit se situent dans le domaine d'émission de lasers à solides ou à semi-conducteurs.

7. Utilisation d'une préparation selon l'une ou plusieurs des revendications 1 à 6 pour l'enregistrement optique réversible d'informations.

8. Utilisation d'une préparation selon l'une ou plusieurs des revendications 1 à 6 dans un procédé permettant l'extraction non destructive de l'information.

9. Utilisation d'une préparation selon l'une ou plusieurs des revendications 1 à 6 dans l'holographie ou dans la reconnaissance des formes ou dans des réseaux neuronaux optiques et/ou des mémoires associatives.

10. Utilisation d'une préparation selon l'une ou plusieurs des revendications 1 à 6 comme absorbants reconfigurables, éléments optiques ou modulateurs de phase reconfigurables.

11. Utilisation d'une préparation selon l'une ou plusieurs des revendications 1 à 6, en combinaison avec un support d'enregistrement transitoire.

12. Utilisation d'une préparation selon l'une ou plusieurs des revendications 1 à 6 dans des mélanges avec d'autres variantes de membrane pourpre.

13. Support d'enregistrement d'informations contenant une préparation selon l'une ou plusieurs des revendications 1 à 6.

14. Procédé d'enregistrement et d'extraction non destructive d'informations dans une préparation selon l'une ou plusieurs des revendications 1 à 6, caractérisé en ce que l'on enregistre l'information en exposant la préparation à de la lumière polarisée linéairement d'une longueur d'onde située dans le domaine du maximum d'absorption de l'état initial de la variante de bactériorhodopsine contenue dans la préparation, et on détecte l'information ainsi enregistrée en déterminant la variation de l'état de polarisation d'un rayon de détection sans activité photochimique, polarisé linéairement, après son passage à travers la préparation, le rayon de détection n'étant polarisé ni perpendiculairement, ni parallèlement au sens de polarisation de la lumière d'enregistrement.
